# EUROPEAN PATENT APPLICATION

(11) **EP 2 075 523 A1**
(43) Date of publication of application: **01.07.2009**
(21) Application number: 08102916.7
(22) Date of filing: 26.03.2008
(51) Int. Cl.: F28F 13/00, B22F 3/11, B29C 70/88, B29C 67/20

(54) **Method for making a heat dissipating device and product made thereby**

(30) Priority: 26.12.2007 TW 96150255
(71) Applicant: Luo, Chin-Kuang, Taichung City (TW)
(72) Inventor: Luo, Chin-Kuang, Taichung City (TW)
(74) Representative: Cohausz & Florack

(57) **Abstract**

A method for making a heat dissipating device having an irregular porous structure includes the steps of: (a) blending a low temperature combustible solid material, a solid binder component (42), and a heat-conducting component (41) to form a mixture; (b) molding the mixture to form a molded article (4) by heating the mixture at a temperature that is higher than a melting temperature of the solid binder component (42), that is lower than a melting temperature of the heat-conducting component (41), and that is sufficiently high to burn or melt out the low temperature combustible solid material; and (c) cooling the molded article.

## Description

The invention relates to a method for making a heat dissipating device, more particularly to a method for making a heat dissipating device having an irregular porous structure. The invention also relates to a heat dissipating device made by the method.

Heat is produced by a machine, an optical device, or an electronic device due to friction, electricity discharge, or light radiation that occurs in operation. The produced heat should be effectively dissipated so as to enhance the efficiency and/or the service life of the machine or device.

Conventionally, a heat dissipating device having a fin-like or honeycomb-like structure is used to increase the heat dissipation area so as to improve the heat dissipating efficiency.

The heat dissipating device having the honeycomb-like structure has an increased heat dissipation area as compared to the heat dissipating device having a fin-like structure. However, since the pores of the honeycomb-like structure are not communicated with each other, the produced heat cannot be removed effectively via air convection.

An object of the present invention is to provide a method for making a heat dissipating device having an irregular porous structure. The method includes the steps of:
(a) blending a low temperature combustible solid material, a solid binder component, and a heat-conducting component to form a mixture;
(b) molding the mixture to form a molded article by heating the mixture at a temperature that is higher than a melting temperature of the solid binder component, that is lower than a melting temperature of the heat-conducting component, and that is sufficiently high to burn or melt out the low temperature combustible solid material; and
(c) cooling the molded article.

Another object of this invention is to provide a heat dissipating device, which includes a sintered article including: a plurality of heat-conducting granules; a solid binder component interconnecting the heat-conducting granules; and a plurality of irregular passages formed within the sintered article.

Other features and advantages of the present invention will become apparent in the following detailed description of the preferred embodiments with reference to the accompanying drawings, of which:
Figure 1 is a flow chart of a first preferred embodiment of a method for making a heat dissipating device having an irregular porous structure according to this invention;
Figure 2 is a schematic view of the heat dissipating device made via the first preferred embodiment;
Figure 3 is a flow chart of a second preferred embodiment of a method for making a heat dissipating device having an irregular porous structure according to this invention; and
Figure 4 is a schematic view of the heat dissipating device made via the second preferred embodiment.

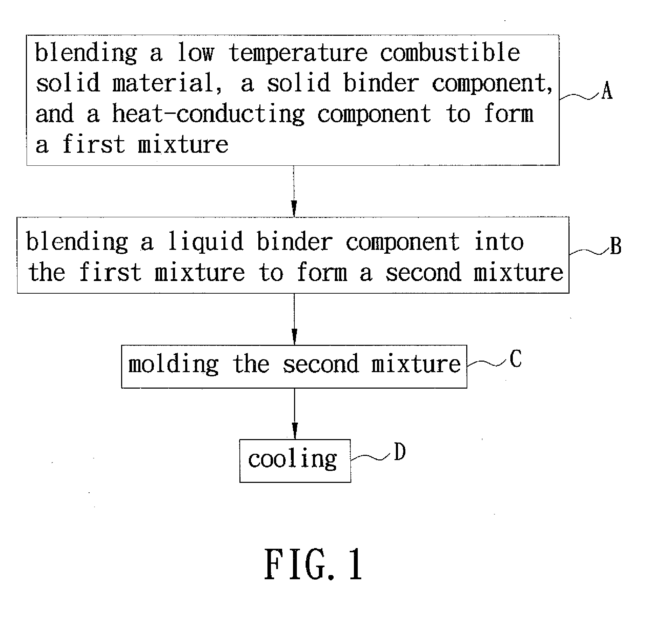

Referring to Figure 1, the first preferred embodiment of a method for making a heat dissipating device having an irregular porous structure according to this invention is shown to include the steps of:
(A) blending a low temperature combustible solid material, a solid binder component, and a heat-conducting component to form a first mixture:
   A low temperature combustible solid material, a solid binder component, and a heat-conducting component are blended in a predetermined ratio to form a first mixture. The low temperature combustible solid material, the solid binder component, and the heat-conducting component are granular. The solid binder component has a heat-resistant temperature higher than that of the low temperature combustible solid material and lower than that of the heat-conducting component. The heat-conducting component has a heat-resistant temperature higher than 500 °C. Preferably, the low temperature combustible solid material has a granular size smaller than 5 mm, the solid binder component has a granular size smaller than 2 mm, and the heat-conducting component has a granular size smaller than 1 mm.
(B) blending a liquid binder component into the first mixture:
   A liquid binder component is blended into the first mixture to form a second mixture.
   The low temperature combustible solid material is in an amount of 5-30 wt% of the second mixture. The material suitable for use as the low temperature combustible solid material is wood flour, rice stalk, rice grains, rice husk, seeds, barley, wheat, bean, plant branches, plant leaves, charcoal, wood coal, paper, plastic pellets, or the like, and can be used either alone or in a combination.
   The solid binder component is in an amount of 5-40 wt% of the second mixture. The material suitable for use as the solid binder component is tin powders, composite copper powders, aluminum powders, copper powders, zinc powders, or the like, and can be used either alone or in a combination.
   The heat-conducting component is in an amount of 20-80 wt% of the second mixture. The material suitable for use as the heat-conducting component is copper, aluminum, bismuth, antimony, tin, tungsten, nickel, cobalt, zinc, cerium, tellurium, graphite, carbon fiber, copper oxide, copper bromide, aluminum oxide, aluminum nitride, silicon, or the like, and can be used either alone or in a combination.
   The liquid binder component is in an amount of 3-25 wt% of the second mixture. The material suitable for use as the liquid binder component is water and combustible agricultural glue.
   It should be noted that in the practice of this invention, the material chosen for the solid binder component should be different from that chosen for the heat-conducting component.
(C) molding the second mixture:
   The second mixture is pressed in a mold, and is molded to form a molded article by heating the mixture at a temperature that is higher than a melting temperature of the solid binder component, that is lower than a melting temperature of the heat-conducting component, and that is sufficiently high to burn or melt out the low temperature combustible solid material and to vaporize or burn out the liquid binder component. Preferably, the second mixture is sintered at a temperature higher than 500°C to burn the low temperature combustible solid material, to vaporize the liquid binder component, and to melt the solid binder component so that the solid binder component flows and interconnects the heat-conducting component. Preferably, the heating is conducted by introducing inert gas under a reduced pressure.
   Optionally, a plurality of rods can be inserted into the second mixture prior to pressing the mixture in the mold. The rods are made of a material that is the same as that of the low temperature combustible solid material or the heat-conducting component, and have a diameter ranging from 0.1 mm to 5 mm.
   Optionally, the second mixture can be heated directly to form an article without molding.
(D) cooling:
   The molded article is cooled by quenching so as to obtain the heat dissipating device having an irregular porous structure. The cooling can be enhanced using a fan so as to cool the molded article and to remove the burned low temperature combustible solid material and the vaporized liquid binder component.

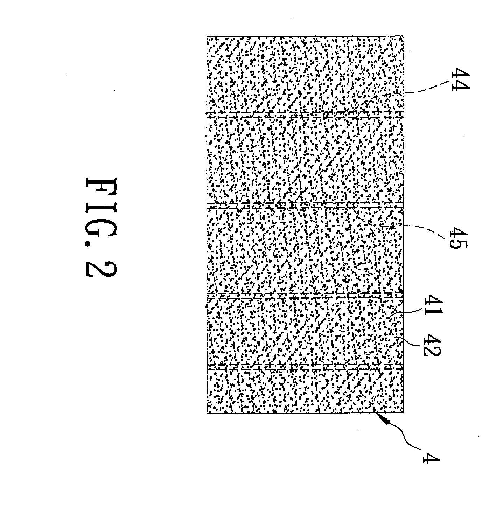

Referring to Figure 2, the heat dissipating device having an irregular porous structure made via the first preferred embodiment is shown to include a sintered article 4, which includes: a plurality of heat-conducting granules 41; a solid binder component 42 interconnecting the heat-conducting granules 41; and a plurality of irregular passages formed within the sintered article 4 and communicated with each other. Preferably, the passages have a width ranging from 0.1 mm to 5 mm.

Preferably, the heat dissipating device further includes a plurality of substantially straight holes 44 extending through the sintered article 4 when the rods used in the aforesaid method are made of a material that is the same as that of the low temperature combustible solid material. The rods are removed after the aforesaid cooling step. The holes 44 have a diameter ranging from 0.1 mm to 5 mm.

Preferably, the heat dissipating device further includes a plurality of heat-conducting rods 45 extending through the sintered article 4 when the rods used in the aforesaid method are made of a material that is the same as that of the heat-conducting component. The heat-conducting rods 45 have a diameter ranging from 0.1 mm to 5 mm.

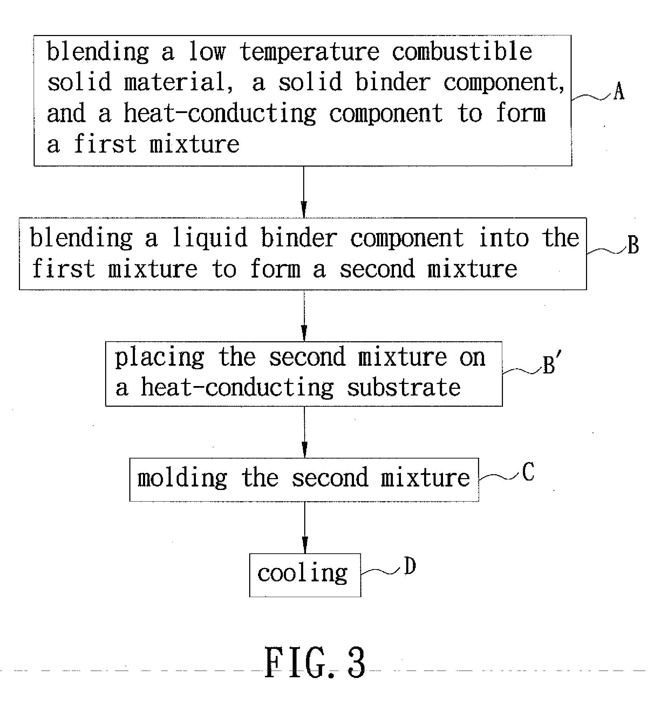

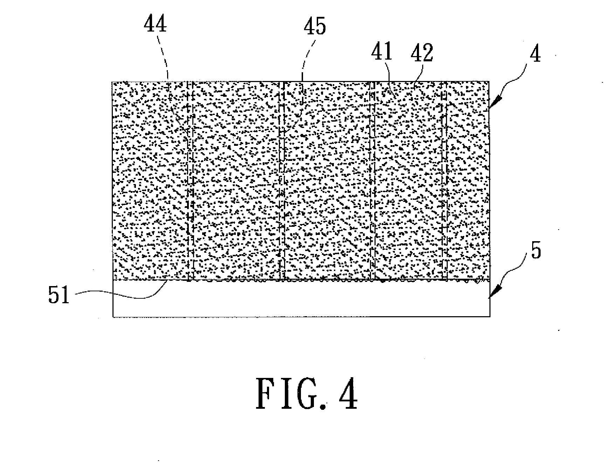

Referring to Figures 3 and 4, the second preferred embodiment of a method for making a heat dissipating device having an irregular porous structure according to this invention is shown to be similar to the first preferred embodiment except that the second preferred embodiment further includes a step (B') of placing the second mixture on a heat-conducting substrate 5 prior to step (C) so that the second mixture is molded on and bound to the heat-conducting substrate 5 after step (C) . The heat-conducting substrate 5 is made of a material such as copper, aluminum, carbon fiber, graphite, or the like. Preferably, the heat-conducting substrate 5 is roughened prior to placing the second mixture on the heat-conducting substrate 5.

The heat dissipating device having an irregular porous structure made via the second preferred embodiment is shown to be similar to that made via the first preferred embodiment, except that the heat dissipating device made via the second preferred embodiment further includes the heat-conducting substrate 5 having a roughened top surface 51 bound to the sintered article 4. Preferably, the heat-conducting substrate 5 has a thickness greater than 1 mm.

In view of the aforesaid, the following are some of the advantages of the present invention over the prior art:
1. The heat dissipating device of the present invention has the irregular porous structure in which a plurality of irregular passages are formed and are communicated with each other. Therefore, the heat produced by a machine or a device can be effectively transmitted from the heat-conducting granules 41 via an increased heat dissipation area into the irregular passages, and then can be effectively dissipated out of the heat dissipating device through air convection in the irregular passages.
2. Since the heat-conducting granules 41 are interconnected through the solid binder component 42, the sintered article 4 of the heat dissipating device possesses satisfactory mechanical strength.
3. The heat dissipating device of the present invention further includes a plurality of substantially straight holes 44 and/or a plurality of heat-conducting rods 45, which further enhance the heat dissipating effect.

## Claims

1. A method for making a heat dissipating device having an irregular porous structure, **characterized by** the steps of:
(a) blending a low temperature combustible solid material, a solid binder component, and a heat-conducting component to form a mixture;
(b) molding the mixture to form a molded article by heating the mixture at a temperature that is higher than a melting temperature of the solid binder component, that is lower than a melting temperature of the heat-conducting component, and that is sufficiently high to burn or melt out the low temperature combustible solid material; and
(c) cooling the molded article.

2. The method as claimed in Claim 1, further **characterized by** a step of blending a liquid binder component into the mixture prior to step (b).

3. The method as claimed in Claim 1, **characterized in that** the low temperature combustible solid material, the solid binder component, and the heat-conducting component are granular, the solid binder component having a heat-resistant temperature higher than that of the low temperature combustible solid material and lower than that of the heat-conducting component, the heat-conducting component having a heat-resistant temperature higher than 500 °C.

4. The method as claimed in Claim 3, **characterized in that** the low temperature combustible solid material has a granular size smaller than 5 mm, the solid binder component has a granular size smaller than 2 mm, and the heat-conducting component has a granular size smaller than 1 mm.

5. The method as claimed in Claim 2, **characterized in that** the low temperature combustible solid material is in an amount of 5-30 wt% of the mixture, and is selected from the group consisting of wood flour, rice stalk, rice grains, rice husk, seeds, barley, wheat, bean, plant branches, plant leaves, charcoal, wood coal, paper, and plastic pellets.

6. The method as claimed in Claim 2, **characterized in that** the solid binder component is in an amount of 5-40 wt% of the mixture, and is selected from the group consisting of tin powders, composite copper powders, aluminum powders, copper powders, and zinc powders.

7. The method as claimed in Claim 2, **characterized in that** the heat-conducting component is in an amount of 20-80 wt% of the mixture, and is selected from the group consisting of copper, aluminum, bismuth, antimony, tin, tungsten, nickel, cobalt, zinc, cerium, tellurium, graphite, carbon fiber, copper oxide, copper bromide, aluminum oxide, aluminum nitride, and silicon.

8. The method as claimed in Claim 2, **characterized in that** the liquid binder component is in an amount of 3-25 wt% of the mixture, and is selected from the group consisting of water and combustible agricultural glue.

9. The method as claimed in claim 2, **characterized in that** step (b) is conducted at a temperature higher than 500°C to burn the low temperature combustible solid material, to vaporize the liquid binder component, and to melt the solid binder component so that the solid binder component flows and interconnects the heat-conducting component.

10. The method as claimed in Claim 1, **characterized in that** step (b) is conducted by pressing the mixture in a mold.

11. The method as claimed in Claim 10, further **characterized by** a step of inserting a plurality of rods into the mixture prior to pressing the mixture in the mold.

12. The method as claimed in Claim 11, **characterized in that** the rods are made of a material that is the same as that of one of the low temperature combustible solid material and the heat-conducting component.

13. The method as claimed in Claim 11, **characterized in that** the rods have a diameter ranging from 0.1 mm to 5 mm.

14. The method as claimed in Claim 1, **characterized in that** the heating is conducted by introducing inert gas under a reduced pressure.

15. The method as claimed in Claim 2, further
**characterized by** a step of placing the mixture on a heat-conducting substrate (5) prior to step (b) so that the mixture is molded on and bound to the substrate (5) .

16. The method as claimed in Claim 15, **characterized in that** the substrate (5) is made of a material selected from the group consisting of copper, aluminum, carbon fiber, and graphite.

17. The method as claimed in Claim 15, further **characterized by** a step of roughening the substrate (5) prior to placing the mixture on the substrate (5).

18. A heat dissipating device, **characterized by**:
a sintered article (4) including
a plurality of heat-conducting granules (41);
a solid binder component (42) interconnecting said heat-conducting granules (41); and
a plurality of irregular passages formed within said sintered article (4).

19. The heat dissipating device as claimed in Claim 18, **characterized in that** said irregular passages have a width ranging from 0.1 mm to 5 mm.

20. The heat dissipating device as claimed in Claim 18, **characterized in that** said sintered article (4) further has a plurality of substantially straight holes (44) extending through said sintered article (4) and having a diameter ranging from 0.1 mm to 5 mm.

21. The heat dissipating device as claimed in Claim 18, **characterized in that** said sintered article (4) further includes a plurality of heat-conducting rods (45) extending through said sintered article (4) and having a diameter ranging from 0.1 mm to 5 mm.

22. The heat dissipating device as claimed in Claim 18, further **characterized by** a heat-conducting substrate (5) bound to said sintered article (4).

23. The heat dissipating device as claimed in Claim 22, **characterized in that** said heat-conducting substrate (5) has a roughened top surface bound to said sintered article (4).

24. The heat dissipating device as claimed in Claim 22, **characterized in that** said heat-conducting substrate (5) has a thickness greater than 1 mm.

25. The heat dissipating device as claimed in Claim 18, **characterized in that** said solid binder component is selected from the group consisting of tin powders, composite copper powders, aluminum powders, copper powders, and zinc powders, and wherein said heat-conducting component is selected from the group consisting of copper, aluminum, bismuth, antimony, tin, tungsten, nickel, cobalt, zinc, cerium, tellurium, graphite, carbon fiber, copper oxide, copper bromide, aluminum oxide, aluminum nitride, and silicon.
